# EUROPEAN PATENT APPLICATION

(11) **EP 2 108 519 A2**
(43) Date of publication of application: **14.10.2009**
(21) Application number: 09156460.9
(22) Date of filing: 27.03.2009
(51) Int. Cl.: B41M 5/00, C09D 11/00, C09D 11/10

(54) **Ink-jet recording water-based ink composition**

(30) Priority: 28.03.2008 JP 2008087215
(71) Applicant: Seiko Epson Corporation, Shinjuku-ku Tokyo (JP)
(72) Inventor: Mukai, Hiroshi, Nagano 392-8502 (JP); Aoki, Katsuko, Nagano 392-8502 (JP); Mori, Takashi, Tokyo 105-8640 (JP); Sakiyama, Hirofumi, Tokyo 105-8640 (JP); Seko, Tomoaki, Tokyo 105-8640 (JP); Bessho, Keiichi, Tokyo 105-8640 (JP)
(74) Representative: HOFFMANN EITLE

(57) **Abstract**

An ink-jet recording water-based ink composition includes a polymer obtained by emulsion polymerization of a monomer having an ethylene-type unsaturated bond in the molecule and divinylbenzene in the presence of a reactive emulsifier, a polyethylene-based wax, a water-soluble resin, water, and a colorant. When ink coat is formed on a plastic film having a degree of gloss at 60° of 140 to 150 by discharging droplets of the ink composition onto the plastic film, the ink coat has a degree of gloss at 60° within a range of 50 to 120.

## Description

The entire disclosure of Japanese Patent Application No. 2008-087215, filed March 28, 2008, is expressly incorporated herein by reference.

### BACKGROUND

### 1. Technical Field

The present invention relates to an ink composition that can exhibit excellent printing quality even when the printing is directly performed on, for example, a plastic recording medium that is not applied with surface treatment for improving printing quality.

### 2. Related Art

In an ink-jet recording method, printing is performed by making ink droplets fly and adhere to a recording medium such as paper. Because of recent innovative progress in ink-jet recording technology, the ink-jet recording method has been also used in the field of highly fine printing, which was achieved only by printing by a plate making system or a color photo system before. With this progress, a technology for directly printing by the ink-jet recording method on a recording medium having low liquid absorption, such as plastic films, has been developed. The plastic printed matter is supposed to be used in outside where the use of paper is unsuitable and is therefore required to have higher water resistance and higher light resistance. In addition, in printed matter that is supposed to be touched with hands, such as labels, plastic films are suitable as the printing medium compared to paper. Also in this case, the plastic printed matter is required to have high rub resistance.

When printing is performed onto a recording medium having low liquid absorption, such as plastic films, a solvent ink, UV curable ink, or two-component curable ink has thitherto been used as the ink for ink-jet recording. However, the solvent ink emits odor of the solvent, and the effect of the volatile component on health is considerable. Also in the UV curable ink and the two-component curable ink, the effect of the components such as the curable monomer on health is considerable.

When an ink-jet recording water-based ink that is applied to paper for commonly use or exclusive use is applied to, for example, a plastic film, the adhesion, scratch resistance, and water resistance of the recorded image are insufficient in some cases.

Regarding these problems, JP-A-9-286940 proposes an ink-jet recording water-based ink that can form a satisfactory image also on a recording medium not applied with surface treatment by printing with two liquids. Furthermore, JP-T-2000-517370 proposes an ink-jet recording water-based ink that can directly print on, for example, plastic base materials by containing a binder resin and a wax component.

Furthermore, JP-A-2003-26180 proposes a water-based ink that can form a satisfactory image on paper exclusively used for ink-jet printing and has excellent rub resistance by containing a particular copolymer and a wax.

### SUMMARY

The present inventors have found the fact that an ink-jet recording water-based ink composition that exhibits excellent rub resistance and water resistance even when it is applied to a recording medium having low liquid absorption, such as plastic base materials, and has excellent discharge stability can be achieved by containing a polymer obtained by emulsion polymerization of a specific monomer in the presence of a reactive emulsifier, a polyethylene-based wax, and a water-soluble resin such that the degree of gloss of ink coat is within a particular range. The invention has been accomplished based on this finding.

Accordingly, an advantage of some aspects of the invention is an ink-jet recording water-based ink composition that exhibits excellent rub resistance and water resistance even when it is applied to a recording medium having low liquid absorption, such as plastic base materials, and also has excellent discharge stability.

The ink composition according to the invention is an ink-jet recording water-based ink composition containing at least a polymer obtained by emulsion polymerization of a monomer having an ethylene-type unsaturated bond in the molecule and divinylbenzene in the presence of a reactive emulsifier, a polyethylene-based wax, a water-soluble resin, water, and a colorant. When ink coat is formed on a plastic film having a degree of gloss at 60° of 140 to 150 by discharging droplets of the ink composition onto the plastic film, the ink coat has a degree of gloss at 60° within a range of 50 to 120.

According to the invention, an ink-jet recording water-based ink composition that exhibits excellent rub resistance and water resistance even when it is applied to a recording medium with low liquid absorption, such as plastic base materials, and has excellent discharge stability can be obtained.

### DESCRIPTION OF EXEMPLARY EMBODIMENTS

The ink-jet recording water-based ink composition according to the invention contains a polymer obtained by emulsion polymerization of a monomer having an ethylene-type unsaturated bond in the molecule and divinylbenzene in the presence of a reactive emulsifier, a polyethylene-based wax, a water-soluble resin, water, and a colorant as essential components. These components will be described below. Polymer

The polymer used in the invention is obtained by emulsion polymerization of a monomer having an ethylene-type unsaturated bond in the molecule and divinylbenzene in the presence of a reactive emulsifier.

### (1) Monomer having an ethylene-type unsaturated bond in the molecule

In the invention, any monomer having an ethylene-type unsaturated bond in the molecule can be used, without any particular limitation on the molecular structure, as the monomer used together with a divinylbenzene monomer. Examples of the monomer include aromatic monomers such as styrene, α-methylstyrene, o-methylstyrene, p-methylstyrene, m-methylstyrene, vinylnaphthalene, and divinylstyrene; (meth)acrylic acid alkyl esters such as methyl (meth)acrylate, ethyl (meth)acrylate, n-propyl (meth)acrylate, i-propyl (meth)acrylate, n-butyl (meth)acrylate, n-amyl (meth)acrylate, i-amyl (meth)acrylate, hexyl (meth)acrylate, 2-ethylhexyl (meth)acrylate, octyl (meth)acrylate, i-nonyl (meth)acrylate, decyl (meth)acrylate, hydroxymethyl (meth)acrylate, and hydroxyethyl (meth)acrylate; unsaturated carboxylic acids such as itaconic acid, fumaric acid, (meth)acrylic acid, maleic acid, and crotonic acid; ethylene-type unsaturated carboxylic acid amides such as (meth)acrylamide and N-methylol acrylamide; carboxylic acid vinyl esters such as vinyl acetate and vinyl propionate; anhydrides, monoalkylesters, and monoamides of ethylene-type unsaturated dicarboxylic acids; aminoalkylesters of ethylene-type unsaturated carboxylic acids such as aminoethylacrylate, dimethylaminoethylacrylate, and butylaminoethylacrylate; ethylene-type unsaturated carboxylic acid aminoalkylamides such as aminoethylacrylamide, dimethylaminomethyl methacrylamide, and methylaminopropyl methacrylamide; vinyl cyanide compounds such as (meth)acrylonitrile and α-chloroacrylonitrile; unsaturated aliphatic glycidyl esters such as glycidyl (meth)acrylate; and monomers having a functional group such as an alkoxysilane group, a hydroxyl group, or a polyethylene oxide group.

Among the monomers having a functional group, examples of the monomers having an alkoxysilane group as the functional group include γ-methacryloxytriethoxysilane. Examples of the monomers having a hydroxyl group as the functional group include 2-hydroxyethyl (meth)acrylate. Examples of the monomers having a polyethylene oxide group as the functional group include polyethylene glycol monomethacrylate (trade name: Blenmer PE200, manufactured by NOF Corp.).

Among these monomers, preferred are styrene, (meth)acrylic monomers, and (meth)acrylonitrile. Examples of the (meth)acrylic monomers include (meth)acrylic acid alkyl esters such as methyl (meth)acrylate, ethyl (meth)acrylate, n-butyl (meth)acrylate, and 2-ethylhexyl (meth)acrylate. Among these preferred monomers, (meth)acrylic monomers are further preferred as component (b). Furthermore, these monomers, as component (b), can be used alone or as a combination of two or more thereof.

### (2) Divinylbenzene

As the divinylbenzene, ortho-divinylbenzene, metha-divinylbenzene, and para-divinylbenzene can be used alone or as a mixture of two or more thereof. Examples of commercially available divinylbenzene include "DVB-570" (trade name, manufactured by Nippon Steel Chemicals Co., Ltd., divinylbenzene content: 57% by mass, also containing ethylvinylbenzene and so on).

The amount of divinylbenzene used is usually 1 to 30 parts by mass, preferably 2 to 20 parts by mass, and more preferably 3 to 15 parts by mass based on 100 parts by mass of the monomer (component (b)). When the amount of the divinylbenzene used is less than 1 part by mass or more than 30 parts by mass based on 100 parts by mass of the monomer (component (b)), the rub resistance of printed matter tends to be low.

### (3) Reactive emulsifier

The reactive emulsifier used in the invention means a compound having a hydrophilic group, a hydrophobic group, and a radical reactive group in the molecule. Examples of the hydrophilic group include a sulfate group, a carboxylic acid group, and a polyoxyethylene group. Among these hydrophilic groups, preferred are the sulfate group and the polyoxyethylene group. Furthermore, compounds having both the sulfate group and the polyoxyethylene group in a molecule are particularly preferred.

Examples of the hydrophobic group include aliphatic alkyl or aromatic groups having 5 to 20 carbon atoms. Among them, preferred are aliphatic alkyl groups having 8 to 15 carbon atoms. Examples of the radical reactive group include ethylene-type unsaturated groups such as an acrylic group, a methacrylic group, an allyloxy group, a methallyloxy group, and a propenyl group. Among them, preferred are the allyloxy group and the propenyl group. Examples of the reactive emulsifier that is preferably used include compounds having a structure represented by the following Formulae (1) to (6).

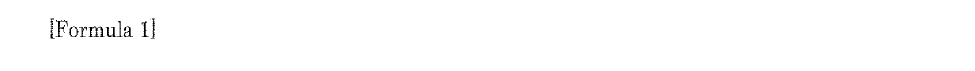

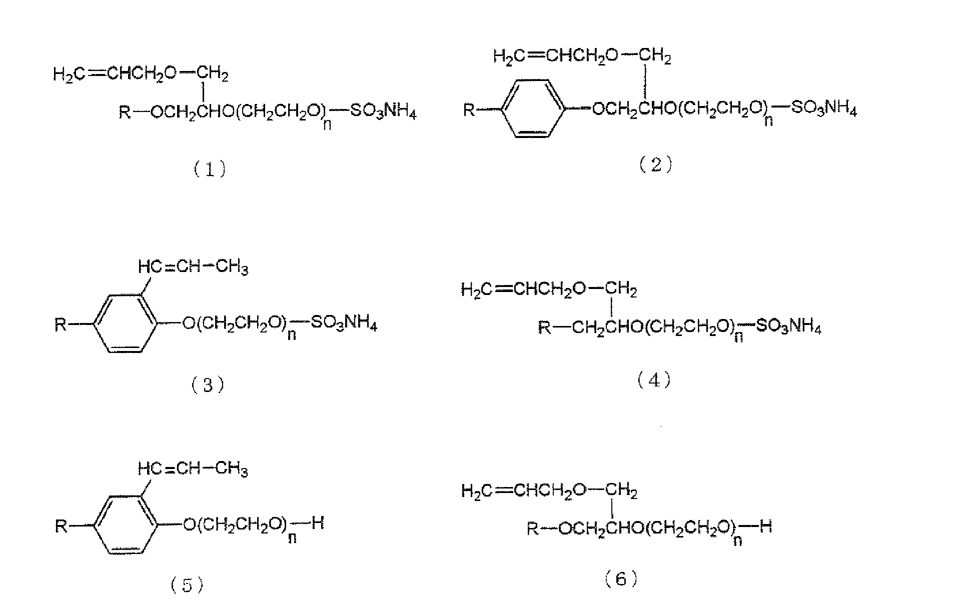

In Formulae (1) to (6), R denotes a hydrocarbon group having 5 to 20 carbon atoms, and n denotes an integer of 5 to 40. The hydrocarbon group having 5 to 20 carbon atoms represented by R includes both an aliphatic alkyl group and an aromatic group.

In the hydrophilic group, an anionic functional group, a cationic functional group, and a nonionic functional group are included, and all these functional groups are preferred. Preferred examples of commercially available reactive emulsifier having the anionic functional group include trade name "Latemul S-180A" (manufactured by Kao Corp.), trade name "Eleminol JS-2" (manufactured by Sanyo Kasei Co., Ltd.), trade names "Aquaron KH-10", "Aquaron HS-10", and "Aquaron BC-10" (these are manufactured by Dai-ichi Kogyo Seiyaku Co., Ltd.), and trade name "Adekalia Soap SE-10N (manufactured by Asahi Denka Ind. Co., Ltd.). Preferred examples of commercially available reactive emulsifier having the nonionic functional group include trade name "Aquaron RS-20" (manufactured by Dai-ichi Kogyo Seiyaku Co., Ltd.) and trade name "Adekalia Soap ER-20 (manufactured by Asahi Denka Ind. Co., Ltd.). In addition, reactive emulsifiers having a cationic functional group can be preferably used. These reactive emulsifiers can be used alone or as a combination of two or more thereof.

The amount of the reactive emulsifier used depends on the number-average particle diameter of polymer particles (component (1)) when they are in a form of particles dispersed in a water-based emulsion, and is preferably 0.5 to 10 parts by mass and more preferably 0.5 to 5 parts by mass based on 100 parts by mass of the monomer (b) (component (b))a. An amount smaller than 0.5 parts by mass may cause insufficient emulsification and also tends to cause unstable polymerization. On the other hand, an amount larger than 10 parts by mass tends to cause disadvantageous foaming of the resulting aqueous emulsion of the component (1).

Together with the above-mentioned reactive emulsifier, a non-reactive emulsifier such as an anionic emulsifier, a nonionic emulsifier, a cationic emulsifier, an ampholyte emulsifier, or a water-soluble polymer can be used. Examples of the anionic emulsifier include alkali metal salts of higher alcohol sulfate, alkali metal salts of alkylbenzene sulfates, alkali metal salts of dialkyl succinate sulfonates, alkali metal salts of alkyl diphenyl ether disulfonates, sulfonate salts of polyoxyethylene alkyl ethers, sulfonate salts ofpolyoxyethylene alkyl phenylethers, phosphate salts of polyoxyethylene alkyl ethers, and phosphate salts of polyoxyethylene alkyl phenylethers.

Examples of the nonionic emulsifier include polyoxyethylene alkyl ethers, polyoxyethylene alkyl phenylethers, and alkyl ethers having sugar chains as the hydrophilic groups. Examples of the cationic emulsifiers include alkylpyridinyl chlorides and alkylammonium chlorides. Examples of the ampholyte emulsifier include lauryl betaine.

The amount of the non-reactive emulsifier used is usually 5 pats by mass or less based on 100 parts by mass of the monomer having an ethylene-based unsaturated bond in the molecule. These non-reactive emulsifiers may be added to a polymerization system at once, separately, continuously, or in a combination thereof.

### (4) Emulsion polymerization

The polymer constituting the ink composition according to the invention can be prepared as, for example, a water-based emulsion, by emulsion-polymerizing the above-mentioned monomer having an ethylene-type unsaturated bond in the molecule and divinylbenzene in the presence of a reactive emulsifier. This emulsion polymerization can be performed by a common method. Furthermore, for the emulsion polymerization, a radical polymerization initiator is usually used. Examples of the radical polymerization initiator that can be used include redox initiators, which are combinations of a reducing agent and an oxidizing agent, for example, an organic hydroperoxide such as cumene hydroperoxide, diisopropylbenzene peroxide, or diisopropylbenzene hydroperoxide; persulfates such as potassium persulfate and ammonium persulfate; azo initiators such as azobisisobutyronitrile, dimethyrl-2,2'-azobisisobutyrate, and 2-carbamoyl azaisobutyronitrile; and organic peroxides such as benzoyl peroxide and lauroyl peroxide. Among them, organic peroxides are preferred.

The amount of the radical polymerization initiator used is usually 0.05 to 20 parts by mass and preferably 0.1 to 10 parts by mass based on 100 parts by mass of the monomer having an ethylene-based unsaturated bond in the molecule.

In the emulsion polymerization, based on 100 parts by mass of the monomer having an ethylene-based unsaturated bond in the molecule, for example, 0.5 to 5 parts by mass of the reactive emulsifier, 1000 to 5000 parts by mass of water, and a radical polymerization initiator, and, according to need, for example, another emulsifier such as a non-reactive emulsifier and an organic solvent are used. The polymerization temperature is usually 5 to 100°C and preferably 30 to 90°C. The polymerization time is usually 0.1 to 10 hours and preferably 2 to 5 hours. The method for adding the monomer and divinylbenzene is not particularly limited, and any method, for example, addition at once, continuously, or fractionally, can be employed.

The emulsion polymerization is preferably carried out in the presence of a chain transfer agent. By using the chain transfer agent, the rub resistance of the image formed by printing the ink composition on a recording medium can be improved. The reason thereof is not clear, but it is thought that the chain transfer agent binds to the terminal of the polymer to modify the compatibility between the polymer and the wax and, as a result, the wax component easily bleeds out on the surface of ink coat to improve the rub resistance.

Preferable examples of the chain transfer agent that can be used in the invention include mercaptanes such as octylmercaptane, n-dodecylmercaptane, t-dodecylmercaptane, n-hexadecylmercaptane, n-tetradecylmercaptane, and t-tetradeeylmereaptane; xanthogen disulfides such as dimethylxanthogen disulfide, diethylxanthogen disulfide, and diisopropylxanthogen disulfide; thiuram disulfides such as tetramethylthiuram disulfide, tetraethylthiuram disulfide, and tetrabutylthiuram disulfide; halogenated hydrocarbons such as carbon tetrachloride and ethylene bromide; hydrocarbons such as pentaphenylethane, 1,1-diphenylethylene, and α-methyl styrene dimer; and acrolein, methacrolein, allyl alcohol, 2-ethylhexyl thioglycolate, terpinolene, α-terpinene, γ-terpinene, and dipentene. Among them, preferred are mercaptanes, xanthogen disulfides, thiuram disulfides, carbon tetrachloride, 1,1-diphenylethylene, α-methyl styrene dimer, and 2-ethylhexyl thioglycolate. These chain transfer agents can be used alone or as a combination of two or more thereof.

The amount of the chain transfer agent used is usually 0.1 to 10 pats by mass, preferably 0.2 to 7 parts by mass, more preferably 0.2 to 5 parts by mass, and most preferably 0.3 to 3 parts by mass based on 100 parts by mass of the monomer having an ethylene-based unsaturated bond in the molecule. When the amount of the chain transfer agent is less than 0.1 parts by mass, the rub resistance may be insufficient. On the other hand, an amount larger than 10 parts by mass may cause a decrease in water resistance.

### (5) polymer

The polymer prepared as in above is present in a form of water-based emulsion in the ink composition. The number-average particle diameter of the polymer particles dispersed in the water-based emulsion is preferably 10 to 100 nm and more preferably 30 to 70 nm. In the invention, the term "number-average particle diameter" means a value measured by a dynamic light scattering method. When the number-average particle diameter of the polymer particles is larger than 100 nm, the storage stability tends to be insufficient, and fusion bonding makes it difficult to uniformly form thin coat, resulting in a tendency of a decrease in rub resistance. On the other hand, when the number-average particle diameter is smaller than 10 nm, the polymerization stability may be significantly low. The number-average particle diameter of the polymer particles can be suitably adjusted by, for example, controlling the molecular weight of the polymer or the amount of the emulsifier used.

The weight-average molecular weight (Mw) of the polymer is preferably 5000 to 300000, more preferably 10000 to 250000, and most preferably 30000 to 220000. The weight-average molecular weight (Mw) of the polymer can be suitably adjusted by, for example, controlling the amount and selecting the type of the radical polymerization initiator or using the chain transfer agent.

The glass transition temperature (Tg) of the polymer is preferably 15°C or higher, more preferably 50°C or higher, and most preferably 80°C or higher. When the glass transition temperature (Tg) is lower than 15°C, the discharge stability in printing with a printer tends to be decreased. The upper limit of the glass transition temperature (Tg) of the polymer is not particularly limited, but is preferably 120°C or lower. Polyethylene-based wax

Examples of the wax that can be used as a polyethylene-based wax in a water-based emulsion include polyethylene-based waxes, copolymer waxes composed of ethylene and a monomer having a carboxylic acid group such as methacrylic acid or acrylic acid, and polyethylene oxide waxes. These can be used alone or as a mixture thereof. The wax preferred is a polyethylene oxide wax, in particular, a polyethylene-based wax having polyethylene whose degree of crystallinity is high. The wax is emulsified with water by a common method and then used.

Examples of commercially available water-based emulsion of the polyethylene-based wax include AQUACER 507, AQUACER 515, AQUACER 840 (these are manufactured by BYK-Chemie Japan K.K.) and Hitech E-7025P, Hitech E-2213, Hitech E-9460, Hitech E-9015, Hitech E-4A, Hitech E-5403P, and Hitech E-8237 (these are manufactured by Toho Chemical Industry Co., Ltd.).

The amount of the polyethylene-based wax is usually 5 to 200 parts by mass, preferably 10 to 150 parts by mass, and more preferably 15 to 100 parts by mass based on 100 parts by mass of the polymer. When the amount of the polyethylene-based wax is less than 5 parts by mass, the rub resistance of printed matter tends to be insufficient. On the other hand, when the amount is larger than 200 parts by mass, the water resistance of printed matter tends to be low.

### Water-soluble resin

Examples of the water-soluble resin contained in the ink composition of the invention include acrylic copolymers such as polyvinyl alcohols, polyvinylpyrrolidones, polyacrylic acids, acrylic acid-acrylonitrile copolymers, potassium acrylate-acrylonitrile copolymers, vinyl acetate-acrylate copolymers, and acrylic acid-alkyl acrylate copolymers; styrene-acrylic acid resins such as styrene-acrylic acid copolymers, styrene-methacrylic acid copolymers, styrene-methacrylic acid-alkyl acrylate copolymers, styrene-α-methylstyrene-acrylic acid copolymers, and styrene-α-methylstyrene-acrylic acid-alkyl acrylate copolymers; styrene-maleic acid copolymers; styrene-maleic anhydride copolymers; vinylnaphthalene-acrylic acid copolymers; vinylnaphthalene-maleic acid copolymers; vinyl acetate-based copolymers such as vinyl acetate-ethylene copolymers; vinyl acetate-fatty acid vinylethylene copolymers, vinyl acetate-maleate copolymers, vinyl acetate-crotonic acid copolymers, and vinyl acetate-acrylic acid copolymers; and salts thereof.

Among the above-mentioned water-soluble resins, particularly preferred are polymers having a carboxyl group (preferably, in a salt form), such as the above-mentioned styrene-acrylic acid resins, styrene-maleic acid resins, styrene-maleic anhydride resins, vinylnaphthalene-acrylic acid copolymers, vinylnapbthalene-maleic acid copolymers, and vinyl acetate-acrylic acid copolymers; copolymers of a monomer having a hydrophobic group and a monomer having a hydrophilic group; and polymers of a monomer having a hydrophobic group and a hydrophilic group in the molecular structure.

Examples of the above-mentioned salts include diethylamine, ammonia, ethylamine, triethylamine, propylamine, isopropylamine, dipropylamine, butylamine, isobutylamine, triethanolamine, diethanolamine, aminomethyl propanol, and morpholine. These (co)polymers preferably have a weight-average molecular weight of 3000 to 30000, more preferably 5000 to 15000.

### Colorant

The colorant contained in the ink composition according to the invention is not particularly limited and may be either a dye or a pigment that is contained in common ink-jet recording inks, but the pigment is preferred from the viewpoint of chromogenic properties and weather resistance.

The pigment that can be used is not particularly limited and may be an inorganic pigment or an organic pigment. As the inorganic pigment, in addition to titanium oxide and iron oxide, carbon blacks produced by a known method such as a contact method, a furnace method, or a thermal method can be used. Furthermore, a known dye may be mixed in the ink composition of the invention, according to need.

Examples of the organic pigment include azo pigments such as insoluble azo pigments, condensed azo pigments, azo lakes, and chelate azo pigments; polycyclic pigments such as phthalocyanine pigments, perylene pigments, perinone pigments, anthraquinone pigments, quinacridone pigments, dioxane pigments, thioindigo pigments, isoindolinone pigments, and quinophthalone pigments; dye chelates (for example, basic dye-type chelates and acid dye-type chelates); and organic pigments such as nitro pigments, nitroso pigments, aniline black, and fluorescent pigments. These pigments may be used alone or as a combination of two or more thereof.

Examples of the pigments, as the carbon blacks, include No. 2300, No. 900, HCF88, No. 33, No. 40, No. 45, No. 52, MA7, MA8, MA100, and No. 2200B available from Mitsubishi Chemical Corp.; Raven 5750, Raven 5250, Raven 5000, Raven 3500, Raven 1255, and Raven 700 available from Columbia Chemical Co.; Regal 400R, Regal 330R, Regal 660R, Mogul L, Mogul 700, Monarch 800, Monarch 880, Monarch 900, Monarch 1000, Monarch 1100, Monarch 1300, and Monarch 1400 available from Cabot Corp.; and Color Black FW1, Color Black FW2V, Color Black FW18, Color Black FW200, Color Black S150, Color Black S 160, Color Black S170, Printex 35, Printex U, Printex V, Printex 140U, Special Black 6, Special Black 5, Special Black 4A, and Special Black 4 available from Dexa Co., Ltd. These pigments may be used alone or as a combination of two or more thereof.

Examples of the pigment that is contained in a yellow ink composition include C.I. Pigment Yellows 1, 2, 3, 12, 13, 14, 16, 17, 73, 74, 75, 83, 93, 95, 97, 98, 109, 110, 114, 128, 129, 138, 150, 151, 154, 155, 180, and 185. Preferred is one or a mixture of two or more selected from the group consisting of C.I. Pigment Yellows 74, 109, 110, 128, 138, 180, and 185.

Examples of the pigment that is contained in a magenta ink composition or a light magenta ink composition include C.I. Pigment Reds 5, 7, 12, 48(Ca), 48(Mn), 57(Ca), 57:1, 112, 122, 123, 168, 184, 202, and 209 and C.I. Pigment Violet 19. Preferred is one or a mixture of two or more selected from the group consisting of C.I. Pigment Reds 122, 202, and 209 and C.I. Pigment Violet 19.

Examples of the pigment that is contained in a cyan ink composition or a light cyan ink composition include C.I. Pigment Blues 1, 2, 3, 15:3, 15:4, 15:34, 16, 22, and 60 and C.I. Vat Blues 4 and 60. Preferred is one or a mixture of two or more selected from the group consisting of C.I. Pigment Blues 15:3, 15:4, and 60.

In a preferred embodiment of the invention, the pigment used in the invention preferably has an average particle diameter of 10 to 200 nm and more preferably about 50 to 150 nm.

In addition, the amount of the pigment used in the invention may be suitably determined and is 0.1 to 20% by mass and preferably 0.2 to 10% by mass in the ink composition.

The amount of the pigment is properly adjusted depending on the type of the ink composition such as dark and light ink compositions. In particular, the content of the pigment in a light ink composition is preferably 0.1 to 1.3% by mass and more preferably 0.4 to 1.0% by mass.

In a preferred embodiment of the invention, the pigment used in the invention is preferably added to an ink in a form of a pigment dispersion prepared by dispersing the pigment in an aqueous solvent with a dispersant.

As the preferred dispersant in the ink composition of the invention, a dispersant, a polymer dispersant, or a surfactant that is commonly used for preparing a pigment dispersion can be used.

Examples of the polymer dispersant that is preferably used in the invention include natural polymers, for example, proteins such as glue, gelatin, casein, and albumin; natural rubbers such as gum arabic and gum tragacanth; glucosides such as saponin; alginic acid derivatives such as alginic acid, propylene glycol alginate, triethanolamine alginate, and ammonium alginate; cellulose derivatives such as methyl cellulose, carboxymethyl cellulose, hydroxyethyl cellulose, and ethylhydroxy cellulose.

Other preferred examples of the polymer dispersant include synthetic polymers, and the above-mentioned water-soluble resins can be used likewise. In addition, some of the above-mentioned water-soluble resins also function as polymer dispersants.

Examples of the surfactant preferred as dispersants include anionic surfactants such as fatty acid salts, higher alkyl dicarboxylate salts, higher alcohol sulfate ester salts, higher alkylsulfonate salts, condensates of higher fatty acids and amino acids, sulfosuccinate ester salts, naphthenate salts, liquid fatty oil sulfate ester salts, and alkylallylsulfonate salts; cationic surfactants such as fatty acid amine salts, quaternary ammonium salts, sulfonoium salts, and phosphonium salts; and nonionic surfactants such as polyoxyethylene alkyl ethers, polyoxyethylene alkyl esters, sorbitan alkyl esters, and polyoxyethylene sorbitan alkyl esters. It is understood to those skilled in the art that the above-mentioned surfactants contained in the ink composition also act as surfactants. Water and other components

The ink composition of the present invention preferably contains, in addition to the above-described components, a water-soluble organic solvent and/or a surfactant.

Examples of the water-soluble organic solvent include alcohol compounds.

Examples of the alcohol compounds include diol compounds such as 1,2-pentanediol and 1,2-hexanediol; and monoether compounds of diol compounds, such as ethylene glycol monomethyl ether, ethylene glycol monoethyl ether, ethylene glycol mono-iso-propyl ether, ethylene glycol mono-n-butyl ether, ethylene glycol mono-iso-butyl ether, ethylene glycol mono-tert-butyl ether, ethylene glycol monomethyl ether acetate, diethylene glycol monomethyl ether, diethylene glycol monoethyl ether, diethylene glycol mono-n-propyl ether, diethylene glycol mono-iso-propyl ether, diethylene glycol mono-n-butyl ether, diethylene glycol mono-tert-butyl ether, triethylene glycol mono-n-butyl ether, propylene glycol monomethyl ether, propylene glycol monoethyl ether, propylene glycol mono-n-propyl ether, propylene glycol mono-iso-propyl ether, propylene glycol mono-n-butyl ether, propylene glycol mono-tert-butyl ether, dipropylene glycol monoethyl ether, dipropylene glycol monoethyl ether, dipropylene glycol mono-n-propyl ether, dipropylene glycol-iso-propyl ether, dipropylene glycol mono-n-butyl ether, dipropylene glycol mono-tert-butyl ether, 1-methyl-1-methoxybutanol, triethylene glycol monomethyl ether, triethylene glycol monoethyl ether, and triethylene glycol mono-n-butyl ether.

The water-soluble organic solvents may be used alone or as a combination of two or more thereof, and the amount of the water-soluble organic solvent may be properly determined and is preferably about 0.1 to 30% by mass and more preferably about 1 to 20% by mass.

Among the above-mentioned glycol ethers, preferred are alkyl ethers of polyols, and particularly preferred are ethylene glycol monoethyl ether, ethylene glycol mono-n-butyl ether, diethylene glycol monomethyl ether, diethylene glycol monoethyl ether, diethylene glycol mono-n-butyl ether, triethylene glycol monomethyl ether, triethylene glycol monoethyl ether, and triethylene glycol mono-n-butyl ether. Triethylene glycol mono-n-butyl ether is most preferred.

The amount of the above-mentioned water-soluble organic solvent may be properly determined and is preferably about 0.1 to 30% by mass and more preferably about 1 to 20% by mass.

Examples of the surfactants include anionic surfactants (e.g., sodium dodecylbenzene sulfate, sodium lauryl sulfate, and ammonium salts of polyoxyethylene alkyl ether sulfate), nonionic surfactants (e.g., polyoxyethylene alkyl ether, polyoxyethylene alkyl ester, polyoxyethylene sorbitan fatty acid ester, polyoxyethylene alkylphenyl ether, polyoxyethylene alkylamine, polyoxyethylene alkylamide, acetylene glycol compounds, and polyether modified organosiloxane compounds). These surfactants can be used alone or as a combination of two or more thereof.

Among them, the acetylene glycol compounds and the polyether modified organosiloxane compounds, when they are used in a combination with the above-mentioned diol compounds or monoether compounds thereof, form uniform ink coat without causing plaques of ink on a recording medium with low liquid absorption. Consequently, the rub resistance of printed matter can be further improved.

The acetylene glycol compounds and the polyether modified organosiloxane compounds may be commercially available products. Preferable examples of such acetylene glycol compounds include Surfynol 61, 104, 420, 440, 465, SE, SEF, and 504 available from Air Products and Chemicals, Inc., and preferable examples of the polyether modified organosiloxane compounds include silicone surfactants BYK-345, BYK-346, BYK-347, BYK UV-3510, and BYK-348 available from BYK-Chemie Japan K.K.

The ink composition of the invention may further contain a moisturizing agent. As the moisturizing agent, polyols can be preferably used. Examples of the polyols include glycerin, ethylene glycol, diethylene glycol, and triethylene glycol. The amount of the moisturizing agent to be added may be properly determined and is preferably 0.1 to 30% by mass and more preferably about 1 to 20% by mass. Furthermore, it is obvious to those skilled in the art that part of the above-mentioned water-soluble organic solvent acts as a moisturizing agent.

The ink composition according to the invention can further contain an agent for preventing clogging of a nozzle, a preservative, an antioxidant, an electrical conductivity adjusting agent, a pH adjusting agent, a viscosity adjusting agent, a surface tension adjusting agent, an oxygen absorbing agent, and other additives.

Examples of the preservative/fungicide include sodium benzoate, sodium pentachlorophenol, sodium 2-pyridinethiol-1-oxide, sodium sorbinate, sodium dehydroacetate, and 1,2-benzisothiazolin-3-one (Proxel CRL, Proxel BND, Proxel GXL, Proxel XL-2, and Proxel TN available from ICI Co., Ltd.).

Examples of the pH adjusting agent, a dissolving aid, or the antioxidant include amines such as diethanolamine, triethanolamine, propanolamine, and morpholine and modified derivatives thereof; inorganic salts such as potassium hydroxide, sodium hydroxide, and lithium hydroxide; ammonium hydroxide; quaternary ammonium hydroxides (e.g., tetramethylammonium hydroxide); carbonates such as potassium carbonate, sodium carbonate, and lithium carbonate; phosphates; nitrogen-containing compounds such as 2-pyrrolidone, N-methyl-2-pyrrolidone, urea, thiourea, and tetramethylurea; alohanates such as alohanate and methyl alohanate; biurets such as biuret, dimethyl biuret, and tetramethyl biuret; and L-ascorbic acid and salts thereof.

The ink composition of the invention may contain an antioxidant and a UV absorber, and examples thereof include Tinuvin 328, 900, 1130, 384, 292, 123, 144, 622, and 770, Irgacor 252 and 153, Irganox 1010, 1076, and 1035, and MD1024 available from Chiba Specialty Chemicals Corp. and oxides of lanthanide.

The ink composition according to the invention can be prepared by dispersing and mixing the above-mentioned components by an appropriate method. Preferably, first, a pigment, a polymer dispersant, and water are mixed with an appropriate disperser (for example, a ball mill, a sand mill, an attritor, a roll mill, an agitator mill, a Henschel mixer, a colloid mill, an ultrasonic homogenizer, a jet mill, or an angstrom mill) to prepare a uniform pigment dispersion. To this dispersion, a polymer separately prepared in a form of emulsion, a polyethylene-based wax, water, a water-soluble organic solvent, and other components are added, followed by sufficient dissolving to prepare an ink solution. The ink solution is sufficiently stirred and then filtered for removing coarse particles and foreign substances, which cause clogging, to give an objective ink composition.

In the invention, the amount of each component can be suitably determined such that, when ink coat is formed on a plastic film having a degree of gloss at 60° of 140 to 150 by discharging droplets of the ink composition onto the plastic film, the ink coat has a degree of gloss at 60° within a range of 50 to 120. By controlling the ink composition so that the degree of gloss of the ink coat is within the above-mentioned range, an ink-jet recording water-based ink composition that exhibits excellent rub resistance and water resistance even when it is applied to a recording medium with low liquid absorption, such as plastic base materials, and also has excellent discharge stability is given. In the invention, the term "degree of gloss" means a degree of gloss measured at a measurement angle of 60° with a measurement device according to JIS Z8741.

The thus obtained ink composition preferably has a viscosity and a surface tension suitable for ink-jet recording. The viscosity of a water-based ink-jet ink at 25°C is usually 0.7 × 10⁻³ to 15 × 16⁻³ Pa·s and preferably 1 × 10⁻³ to 10 × 10⁻³ Pa·s. The surface tension of a water-based ink-jet ink at 25°C is usually 0.2 to 0.7 mN/cm, preferably 0.25 to 0.6 mN/cm, and more preferably 0.3 to 0.4 mN/cm. The viscosity and the surface tension can be adjusted by properly changing the amount of each component described above.

The invention provides a method of recording for forming an image on a recording medium using an ink-jet recording water-based ink composition described above. In the invention, the rub resistance and the water resistance are excellent even when a recording medium having low liquid absorption, such as a plastic base material, is used, and also the discharge stability is excellent.

The recording medium having low liquid absorption to which the ink composition of the invention can be applied is not particularly limited, and the ink composition can be applied to recording media that are not suitable for common ink-jet recording water-based inks, such as plastic base materials and metal plates. Examples of the plastic base materials include vinyl chloride, polyethylene terephthalate (PET), polycarbonate, polyolefin, polystyrene, and polyurethane.

### Examples

The invention will be specifically described with reference to Examples, but is not limited thereto. In the following Examples, "part(s)" and "%" are based on mass, unless otherwise specified. Preparation of polymer

### Manufacturing Example 1

In a 500-mL beaker, 200 g of water, 3 g of acrylic acid, 1.5 g of a sulfate-based reactive emulsifier (trade name "Aquaron KH-10", manufactured by Dai-ichi Kogyo Seiyaku Co., Ltd.), 70 g of styrene, 30 g of butyl acrylate, 10 g of divinylbenzene, and 2 g of 2-ethylhexyl thioglycolate were placed and stirred at 100 rpm for 10 minutes to prepare a monomer emulsion. In a 1-L separable flask, 200 g of water and 1.5 g of a sulfate-based reactive emulsifier (trade name "Aquaron KH-10", manufactured by Dai-ichi Kogyo Seiyaku Co., Ltd.) were placed and stirred at 180 rpm and then heated to 60°C. To the mixture, 2 g of ammonium persulfate was added, followed by heating to 70°C. While maintaining the polymerization temperature at 75°C, the above prepared monomer emulsion was consecutively added to this mixture over three hours for polymerization. Then, aging was carried out at 80°C for one hour. After cooling, the resulting polymer emulsion was neutralized with 10% ammonium aqueous solution such that the pH at room temperature was 7.0. The emulsion was diluted with water to prepare a polymer emulsion (Manufacturing Example 1) having a solid concentration of 15%. Manufacturing Examples 2 to 10

Polymer emulsions (Manufacturing Examples 2 to 10) having a solid concentration of 15% were prepared as in the above-described Manufacturing Example 1 except that the compositions shown in Table 1 were blended. The meanings of the codes in Table 1 are as follows:
a-1: trade name "Aquaron KH-10" (a sulfate-based reactive emulsifier manufactured by Dai-ichi Kogyo Seiyaku Co., Ltd.),
a-2: trade name "Aquaron RS-20" (a nonionic reactive emulsifier manufactured by Dai-ichi Kogyo Seiyaku Co., Ltd.),
a-3: sodium dodecylbenzene sulfate (non-reactive emulsifier),
ST: styrene,
MMA: methyl methacrylate,
BA: butyl acrylate,
2EHA: 2-ethylhexyl acrylate,
c-1: DVB-570 (manufactured by Nippon Steel Chemicals Co., Ltd., divinylbenzene content: 57%), and
d-1: 2-ethylhexyl thioglycolate.

**[Table 1]**

| Blending composition (g) | Acrylic acid | Component (a) | | | Component (b) | | | | Component (c) | Component (d) |
|---|---|---|---|---|---|---|---|---|---|---|
| | | a-1 | a-2 | a-3 | ST | MMA | BA | 2EHA | c-1 | d-1 |
| Manufacturing Example 1 | 3 | 3 | - | - | 70 | - | 30 | - | 10 | 2 |
| Manufacturing Example 2 | 3 | 3 | | - | - | 90 | - | 10 | 10 | 2 |
| Manufacturing Example 3 | 3 | 3 | - | - | - | 90 | 10 | - | 5 | 2 |
| Manufacturing Example 4 | 3 | 3 | - | - | - | 50 | 50 | - | 5 | 2 |
| Manufacturing Example 5 | 3 | - | 3 | - | - | 80 | - | 20 | 5 | 2 |
| Manufacturing Example 6 | 3 | 3 | - | - | 70 | - | 30 | - | 10 | - |
| Manufacturing Example 7 | 3 | 3 | - | - | - | 90 | - | 10 | 1 | 2 |
| Manufacturing Example 8 | 3 | 3 | - | - | - | 90 | - | 10 | 25 | 2 |
| Manufacturing Example 9 | 3 | - | - | 3 | - | 90 | 10 | - | 5 | 2 |
| Manufacturing Example 10 | 3 | 3 | - | - | - | 90 | 10 | - | - | 2 |

The number-average particle diameter (Dn) of the polymer particles contained in each of the prepared polymer emulsions and the weight-average molecular weight (Mw) and the glass transition temperature (Tg) of the polymer were evaluated. The number-average particle diameter (Dn) was measured with a laser particle size analysis system (trade name: "LPA 3100", manufactured by Otsuka Electronics Co.,) according to a common method. The weight-average molecular weight (Mw) was measured with "SC 8010" (trade name, manufactured by Tosoh Corp.) by gel permeation chromatography (GPC) using a calibration curve drawn with polystyrene as a standard under the following conditions:
Eluant: tetrahydrofuran,
Column: trade name "G4000HXL" (manufactured by Tosoh Corp.),
Flow rate: 1000 µL/min, and
Column temperature: 40 °C.

Regarding the glass transition temperature (Tg) of the polymer, samples prepared by drying the water-based emulsions were subjected to measurement of the glass transition temperature (Tg) using "DSC-6200R" (trade name, manufactured by SII Nano Technology Inc.) under the following conditions:
Rate of temperature increase 20°C/min,
Temperature range: -60 to 200°C, and
Sample amount: 10 mg.

### Table 2 shows the evaluation results of the polymer emulsions.

**[Table 2]**

| | Number-average particle diameter (nm) | Weight-average molecular weight (Mw) | Glass transition temperature (Tg (°C)) |
|---|---|---|---|
| Manufacturing Example 1 | 50 | 90000 | 70 |
| Manufacturing Example 2 | 55 | 80000 | 83 |
| Manufacturing Example 3 | 45 | 100000 | 80 |
| Manufacturing Example 4 | 50 | 110000 | 15 |
| Manufacturing Example 5 | 50 | 100000 | 70 |
| Manufacturing Example 6 | 60 | 220000 | 65 |
| Manufacturing Example 7 | 56 | 75000 | 80 |
| Manufacturing Example 8 | 55 | 105000 | 90 |
| Manufacturing Example 9 | 50 | 100000 | 75 |
| Manufacturing Example 10 | 50 | 80000 | 75 |

### Preparation of ink composition

Each ink composition shown in Tables 3 to 9 was prepared as follows: First, a pigment, a water-soluble resin (trade name "Johncryl 62J", manufactured by Johnson Polymer Corp., solid content: 34%), and water were mixed and dispersed with glass beads (diameter: 1.7 mm, an amount of 1.5 times the weight of the mixture) for two hours in a sand mill (manufactured by Yasukawa Seisakusyo K.K.). Then, the glass beads were removed, followed by addition of the above obtained polymer emulsion (solid content: 15%), a polyethylene oxide wax emulsion (trade name "Hitech E2213", manufactured by Toho Chemical Industry Co., Ltd., solid content: 30%), and other components shown in Tables 3 to 9. The resulting mixture was stirred at atmospheric temperature for 20 minutes and then filtered through a membrane filter of 10 µm pore size to give ink compositions of Examples 1 to 32 and ink compositions of Comparative Examples 1 to 20.

**[Table 3]**

| Added component | | Example 1 | Example 2 | Example 3 | Example 4 | Example 5 | Example 6 | Example 7 | Example 8 |
|---|---|---|---|---|---|---|---|---|---|
| Polymer emulsion | Manufacturing Example 1 | 20 | 20 | 20 | 20 | - | - | - | - |
| | Manufacturing Examples 2 | - | - | - | - | 16.7 | 16.7 | 16.7 | 16.7 |
| Hitech E2213 | | 2 | 2 | 2 | 2 | 3.7 | 3.7 | 3.7 | 3.7 |
| Pigment | P. Y. 74 | 5 | - | - | - | 5 | - | - | - |
| | P. V. 19 | - | 5 | - | - | - | 5 | - | - |
| | P. V. 15 : 3 | - | - | - | - | - | - | 5 | - |
| | C. B. 3 | - | - | - | 5 | - | - | - | 5 |
| Water-soluble resin | | 4.4 | 4.4 | 4.4 | 4.4 | 4.4 | 4.4 | 4.4 | 4.4 |
| 1,2-Hexanediol | | 8 | 8 | 8 | 8 | 8 | 8 | 8 | 8 |
| BYK348 | | 0.5 | 0.5 | 0.5 | 0.5 | 0.5 | 0.5 | 0.5 | 0.5 |
| Ultrapure water | | Residual | Residual | Residual | Residual | Residual | Residual | Residual | Residual |

**[Table 4]**

| Added components | | Example 9 | Example 10 | Example 11 | Example 12 | Example 13 | Example 14 | Example 15 | Example 16 |
|---|---|---|---|---|---|---|---|---|---|
| Polymer emulsion | Manufacturing Example 3 | 16.7 | 16.7 | 16.7 | 16.7 | - | - | - | - |
| | Manufacturing Examples 4 | - | - | - | - | 16.7 | 16.7 | 16.7 | 16.7 |
| Hitech E2213 | | 3.7 | 3.7 | 3.7 | 3.7 | 3.7 | 3.7 | 3.7 | 3.7 |
| Pigment | P. Y. 74 | 5 | - | - | - | 5 | - | - | - |
| | P. V. 19 | - | 5 | - | - | - | 5 | - | - |
| | P. V. 15 : 3 | - | - | 5 | - | - | - | 5 | |
| | C. B. 3 | - | - | - | 5 | - | - | - | 5 |
| Water-soluble resin | | 4.4 | 4.4 | 4.4 | 4.4 | 4.4 | 4.4 | 4.4 | 4.4 |
| 1,2-Hexanedio | | 8 | 8 | 8 | 8 | 8 | 8 | 8 | 8 |
| BYK348 | | 0.5 | 0.5 | 0.5 | 0.5 | 0.5 | 0.5 | 0.5 | 0.5 |
| Ultrapure water | | Residual | Residual | Residual | Residual | Residual | Residual | Residual | Residual |

**[Table 5]**

| Added component | | Example 17 | Example 18 | Example 19 | Example 20 | Example 21 | Example 22 | Example 23 | Example 24 |
|---|---|---|---|---|---|---|---|---|---|
| Polymer emulsion | Manufacturing Example 5 | 20 | 20 | 20 | 20 | - | - | - | - |
| | Manufacturing Examples 6 | - | - | - | - | 20 | 20 | 20 | 20 |
| Hitech E2213 | | 2 | 2 | 2 | 2 | 2 | 2 | 2 | 2 |
| Pigment | P. Y. 74 | 5 | - | - | - | 5 | - | - | - |
| | P. V, 19 | - | 5 | - | - | - | 5 | - | - |
| | P. V. 15 : 3 | - | - | 5 | - | - | - | 5 | - |
| | C. B. 3 | - | - | - | 5 | - | - | - | 5 |
| Water-soluble resin | | 4.4 | 4.4 | 4.4 | 4.4 | 4.4 | 4.4 | 4.4 | 4.4 |
| 1,2-Hexanediol | | 8 | 8 | 8 | 8 | 8 | 8 | 8 | 8 |
| BYK348 | | 0.5 | 0.5 | 0.5 | 0.5 | 0.5 | 0.5 | 0.5 | 0.5 |
| Ultrapure water | | Residual | Residual | Residual | Residual | Residual | Residual | Residual | Residual |

**[Table 6]**

| Added component | | Example 25 | Example 26 | Example 27 | Example 28 | Example 29 | Example 30 | Example 31 | Example 32 |
|---|---|---|---|---|---|---|---|---|---|
| Polymer emulsion | Manufacturing Example 7 | 16.7 | 16.7 | 16.7 | 16.7 | - | - | - | - |
| | Manufacturing Examples 8 | - | - | - | - | 16.7 | 16.7 | 16.7 | 16.7 |
| Hitech E2213 | | 3.7 | 3.7 | 3.7 | 3.7 | 3.7 | 3.7 | 3.7 | 3.7 |
| Pigment | P. Y. 74 | 5 | - | - | - | 5 | - | - | - |
| | P. V. 19 | - | 5 | - | - | - | 5 | - | - |
| | P. V. 15: 3 | - | - | 5 | - | - | - | 5 | - |
| | C. B. 3 | - | - | - | 5 | - | - | - | 5 |
| Water-soluble resin | | 4.4 | 4.4 | 4.4 | 4.4 | 4.4 | 4.4 | 4.4 | 4.4 |
| 1,2-Hexanediol | | 8 | 8 | 8 | 8 | 8 | 8 | 8 | 8 |
| BYK348 | | 0.5 | 0.5 | 0.5 | 0.5 | 0.5 | 0.5 | 0.5 | 0.5 |
| Ultrapure water | | Residual | Residual | Residual | Residual | Residual | Residual | Residual | Residual |

**[Table 7]**

| Added component | | Example 1 | Example 2 | Example 3 | Example 4 | Example 5 | Example 6 | Example 7 | Example 8 |
|---|---|---|---|---|---|---|---|---|---|
| Polymer emulsion | Manufacturing Example 9 | 20 | 20 | 20 | 20 | - | - | - | - |
| | Manufacturing Example 10 | - | - | - | - | 20 | 20 | 20 | 20 |
| Hitech E2213 | | 2 | 2 | 2 | 2 | 2 | 2 | 2 | 2 |
| Pigment | P. Y. 74 | 5 | - | - | - | 5 | - | - | - |
| | P. V. 19 | - | 5 | - | - | - | 5 | - | - |
| | P. V. 15 : 3 | - | - | 5 | - | - | - | 5 | - |
| | C. B. 3 | - | - | - | 5 | - | - | - | 5 |
| Water-soluble resin | | 4.4 | 4.4 | 4.4 | 4.4 | 4.4 | 4.4 | 4.4 | 4.4 |
| 1,2-Hexanediol | | 8 | 8 | 8 | 8 | 8 | 8 | 8 | 8 |
| BYK348 | | 0.5 | 0.5 | 0.5 | 0.5 | 0.5 | 0.5 | 0.5 | 0.5 |
| Ultrapure water | | Residual | Residual | Residual | Residual | Residual | Residual | Residual | Residual |

**[Table 8]**

| Added component | | Example 9 | Example 10 | Example 11 | Example 12 | Example 13 | Example 14 | Example 15 | Example 16 |
|---|---|---|---|---|---|---|---|---|---|
| Polymer emulsion | Manufacturing Example 1 | - | - | - | - | - | - | - | - |
| | Manufacturing Example 2 | - | - | - | - | - | - | - | - |
| | Manufacturing Example 3 | - | - | - | - | - | - | - | - |
| | Manufacturing Example 4 | - | - | - | - | - | - | - | - |
| | Manufacturing Example 5 | - | - | - | - | - | - | - | - |
| | Manufacturing Example 6 | - | - | - | - | - | - | - | - |
| | Manufacturing Example 7 | - | - | - | - | - | - | - | - |
| | Manufacturing Example 8 | - | - | - | - | - | - | - | |
| | Manufacturing Example 9 | - | - | - | - | - | - | - | - |
| | Manufacturing Example 10 | - | - | - | - | - | - | - | - |
| Hitech E2213 | | 12 | 12 | 12 | 12 | - | - | - | - |
| Pigment | P. Y. 74 | 5 | - | - | - | 5 | - | - | - |
| | P. V. 19 | - | 5 | - | - | - | 5 | - | - |
| | P. V. 15 : 3 | - | - | 5 | - | - | - | 5 | - |
| | C. B. 3 | - | - | - | 5 | - | - | - | 5 |
| Water-soluble resin | | 4.4 | 4.4 | 4.4 | 4.4 | 4.4 | 4.4 | 4.4 | 4.4 |
| 1,2-Hexanediol | | 8 | 8 | 8 | 8 | 8 | 8 | 8 | 8 |
| BYK348 | | 0.5 | 0.5 | 0.5 | 0.5 | 0.5 | 0.5 | 0.5 | 0.5 |
| Ultrapure water | | Residual | Residual | Residual | Residual | Residual | Residual | Residual | Residual |

**[Table 9]**

| Added component | | Example 17 | Example 18 | Example 19 | Example 20 |
|---|---|---|---|---|---|
| Polymer emulsion | Manufacturing Example 1 | 20 | 20 | 20 | 20 |
| Hitech E2213 | | 2 | 2 | 2 | 2 |
| Pigment | P. Y. 74 | 5 | - | - | - |
| | P. V. 19 | - | 5 | - | - |
| | P. V. 15 : 3 | - | - | 5 | - |
| | C. B. 3 | - | - | - | 5 |
| Water-soluble resin | | 4.4 | 4.4 | 4.4 | 4.4 |
| 1,2-Hexanediol | | - | - | - | - |
| BYK348 | | - | - | - | - |
| Ultrapure water | | Residual | Residual | Residual | Residual |

### (4) Evaluation of printing

### Discharge stability

Each of the ink compositions of Examples 1 to 32 and Comparative Examples 1 to 20 was charged on an ink cartridge of an ink-jet printer (PX-G900, manufactured by Seiko Epson Corp.), and a monochrome image was printed at a 50% duty on an A-PET sheet (manufactured by Mitsubishi Plastics, Inc.) at a resolution of 1440 x 720 dpi. This A-PET sheet is made of a polyethylene terephthalate base material and is not provided with surface treatment, such as ink receiving layer, on the surface thereof. The degree of surface gloss of the A-PET sheet measured at a measurement angle of 60° using a gloss meter (PG-1M, manufactured by Nippon Denshoku Industries Co., Ltd.) was 145.

The image was continuously printed on ten A-PET sheets. Then, a check pattern was printed, and the discharge stability was evaluated according to the following evaluation criteria:
○: no missing and no bend occurred,
△: no missing, but bend occurred, and
X: missing occurred.
   The evaluation results are shown in Table 10.

### Degree of gloss at 60°

Immediately after the printing on A-PET sheets as in above, the printed sheets were heated at 60°C for 10 minutes and then placed at room temperature for one day. The degree of gloss of each printed surface was measured at a measurement angle of 60° using a gloss meter (PG-1M, manufactured by Nippon Denshoku Industries Co., Ltd.). The degree of gloss was evaluated according to the following criteria:
○: 50 to 120,
△ 121 or higher, and
X: less than 50.
   The evaluation results are shown in Table 10.

### Rub resistance

Immediately after the printing on A-PET sheets as in above, the printed sheets were heated at 60°C for 10 minutes and then placed at room temperature for one day. The printed surface was rubbed with cotton cloth 50 times using a Sutherland rub tester. The rub resistance was evaluated according to the following criteria:
○: no scratch and no peeling occurred,
△: no peeling, but scratch occurred, and
X: peeling occurred.
   The evaluation results are shown in Table 10.

### Water resistance

Immediately after the printing on the rear faces of A-PET sheets as in above, the printed sheets were heated at 60°C for 10 minutes and then placed at room temperature for one day. The printed surface was rubbed with wetted tissue paper. The water resistance was evaluated according to the following criteria:
○: no peeling and no coloring to tissue paper occurred,
△ no peeling, but coloring to tissue paper occurred, and
X: peeling occurred.
   The evaluation results are shown in Table 10.

**[Table 10]**

| | Polymer emulsion/wax | Discharging stability | Degree of gloss | Rub resistance | Water resistance |
|---|---|---|---|---|---|
| Example 1 | Manufacturing Example 1/Hitech 2213 | ○ | ○ | ○ | ○ |
| Example 2 | Manufacturing Example 1/Hitech 2213 | ○ | ○ | ○ | ○ |
| Example 3 | Manufacturing Example 1/Hitech 2213 | ○ | ○ | ○ | ○ |
| Example 4 | Manufacturing Example 1/Hitech 2213 | ○ | ○ | ○ | ○ |
| Example 5 | Manufacturing Example 2/Hitech 2213 | ○ | ○ | ○ | ○ |
| Example 6 | Manufacturing Example 2/Hitech 2213 | ○ | ○ | ○ | ○ |
| Example 7 | Manufacturing Example 2/Hitech 2213 | ○ | ○ | ○ | ○ |
| Example 8 | Manufacturing Example 2/Hitech 2213 | ○ | ○ | ○ | ○ |
| Example 9 | Manufacturing Example 3/Hitech 2213 | ○ | ○ | ○ | ○ |
| Example 10 | Manufacturing Example 3/Hitech 2213 | ○ | ○ | ○ | ○ |
| Example 11 | Manufacturing Example 3/Hitech 2213 | ○ | ○ | ○ | ○ |
| Example 12 | Manufacturing Example 3/Hitech 2213 | ○ | ○ | ○ | ○ |
| Example 13 | Manufacturing Example 4/Hitech 2213 | ○ | ○ | ○ | ○ |
| Example 14 | Manufacturing Example 4/Hitech 2213 | ○ | ○ | ○ | ○ |
| Example 15 | Manufacturing Example 4/Hitech 2213 | ○ | ○ | ○ | ○ |
| Example 16 | Manufacturing Example 4/Hitech 2213 | ○ | ○ | ○ | ○ |
| Example 17 | Manufacturing Example 5/Hitech 2213 | ○ | ○ | ○ | ○ |
| Example 18 | Manufacturing Example 5/Hitech 2213 | ○ | ○ | ○ | ○ |
| Example 19 | Manufacturing Example 5/Hitech 2213 | ○ | ○ | ○ | ○ |
| Example 20 | Manufacturing Example 5/Hitech 2213 | ○ | ○ | ○ | ○ |
| Example 21 | Manufacturing Example 6/Hitech 2213 | ○ | ○ | ○ | ○ |
| Example 22 | Manufacturing Example 6/Hitech 2213 | ○ | ○ | ○ | ○ |
| Example 23 | Manufacturing Example 6/Hitech 2213 | ○ | ○ | ○ | ○ |
| Example 24 | Manufacturing Example 6/Hitech 2213 | ○ | ○ | ○ | ○ |
| Example 25 | Manufacturing Example 7/Hitech 2213 | ○ | ○ | ○ | ○ |
| Example 26 | Manufacturing Example 7/Hitech 2213 | ○ | ○ | ○ | ○ |
| Example 27 | Manufacturing Example 7/Hitech 2213 | ○ | ○ | ○ | ○ |
| Example 28 | Manufacturing Example 7/Hitech 2213 | ○ | ○ | ○ | ○ |
| Example 29 | Manufacturing Example 8/Hitech 2213 | ○ | ○ | ○ | ○ |
| Example 30 | Manufacturing Example 8/Hitech 2213 | ○ | ○ | ○ | ○ |
| Example 31 | Manufacturing Example 8/Hitech 2213 | ○ | ○ | ○ | ○ |
| Example 32 | Manufacturing Example 8/Hitech 2213 | ○ | ○ | ○ | ○ |

**[Table 11]**

| | Polymer emulsion/wax | Discharging stability | Degree of gloss | Rub resistance | Water resistance |
|---|---|---|---|---|---|
| Example 1 | Manufacturing Example 9/Hitech 2213 | △ | × | △ | ○ |
| Example 2 | Manufacturing Example 9/Hitech 2213 | △ | × | △ | ○ |
| Example 3 | Manufacturing Example 9/Hitech 2213 | △ | × | △ | ○ |
| Example 4 | Manufacturing Example 9/Hitech 2213 | △ | × | △ | ○ |
| Example 5 | Manufacturing Example 10/Hitech 2213 | △ | × | △ | ○ |
| Example 6 | Manufacturing Example 10/Hitech 2213 | △ | × | △ | ○ |
| Example 7 | Manufacturing Example 10/Hitech 2213 | △ | × | △ | ○ |
| Example 8 | Manufacturing Example 10/Hitech 2213 | △ | × | △ | ○ |
| Example 9 | -/Hitech 2213 | △ | ○ | △ | × |
| Example 10 | -/Hitech 2213 | △ | ○ | △ | × |
| Example 11 | -/Hitech 2213 | △ | ○ | △ | × |
| Example 12 | -/Hitech 2213 | △ | ○ | △ | × |
| Example 13 | -/- | ○ | △ | × | △ |
| Example 14 | -/- | ○ | △ | × | △ |
| Example 15 | -/- | ○ | △ | × | △ |
| Example 16 | -/- | ○ | △ | × | △ |
| Example 17 | Manufacturing Example 1/Hitech 2213 | △ | × | △ | ○ |
| Example 18 | Manufacturing Example 1/Hitech 2213 | △ | × | △ | ○ |
| Example 19 | Manufacturing Example 1/Hitech 2213 | △ | × | △ | ○ |
| Example 20 | Manufacturing Example 1/Hitech 2213 | △ | × | △ | ○ |

## Claims

1. An ink-jet recording water-based ink composition comprising
a polymer obtained by emulsion polymerization of a monomer having an ethylene-type unsaturated bond in the molecule and divinylbenzene in the presence of a reactive emulsifier;
a polyethylene-based wax;
a water-soluble resin;
water; and
a colorant, wherein
when ink coat is formed on a plastic film having a degree of gloss at 60° of 140 to 150 by discharging droplets of the ink composition onto the plastic film, the ink coat has a degree of gloss at 60° within a range of 50 to 120.

2. The ink composition according to Claim 1, wherein the reactive emulsifier has an anionic functional group.

3. The ink composition according to Claim 1, wherein the monomer having an ethylene-type unsaturated bond in the molecule is a (meth)acrylic monomer.

4. The ink composition according to Claim 1, wherein the glass transition temperature (Tg) of the polymer is 15°C or higher.

5. The ink composition according to Claim 1, wherein the weight-average molecular weight of the polymer is 30000 to 220000.

6. The ink composition according to Claim 1, wherein the polymer is in a form of particles having a number-average particle diameter of 10 to 100 nm dispersed in a water-based emulsion, in the ink composition.

7. The ink composition according to Claim 1, wherein the polymer is prepared by emulsion polymerization in the presence of a chain transfer agent.

8. The ink composition according to Claim 1, wherein the water-soluble resin is selected from the group consisting of polymers having a carboxyl group, copolymers of a monomer having a hydrophobic group and a monomer having a hydrophilic group, and polymers of a monomer having a hydrophobic group and a hydrophilic group in the molecular structure.

9. The ink composition according to Claim 1, wherein the colorant is a pigment.

10. The ink composition according to Claim 1, further comprising a water-soluble organic solvent and/or a surfactant.

11. The ink composition according to Claim 10, wherein the water-soluble organic solvent is an alcohol compound.

12. The ink composition according to Claim 10, wherein the surfactant is ether modified organosiloxane compound.

13. An ink-jet recording method comprising:
discharging droplets of an ink composition onto a recording medium so that the droplets adhere to the recording medium, wherein the ink composition is the ink composition according to Claim 1.

14. The method according to Claim 13, further comprising
heating the ink composition adhering to the recording medium to 35°C or higher.

15. Recorded matter prepared by the ink-jet recording method according to Claim 13.
